(19) Europäisches Patentamt
European Patent Office
Office européen des brevets

(11) **EP 3 174 344 A1**

(12) **EUROPEAN PATENT APPLICATION**
published in accordance with Art. 153(4) EPC

(43) Date of publication:
**31.05.2017 Bulletin 2017/22**

(51) Int Cl.:
***H04W 52/02*** (2009.01)

(21) Application number: **14881657.2**

(22) Date of filing: **09.10.2014**

(86) International application number:
**PCT/CN2014/088239**

(87) International publication number:
**WO 2015/117348 (13.08.2015 Gazette 2015/32)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **24.07.2014 CN 201410355953**

(71) Applicant: **ZTE Corporation**
**Shenzhen, Guangdong 518057 (CN)**

(72) Inventors:
• **WANG, Zhigang**
**Shenzhen**
**Guangdong 518057 (CN)**

• **HUANG, Weifang**
**Shenzhen**
**Guangdong 518057 (CN)**
• **CUI, Yijun**
**Shenzhen**
**Guangdong 518057 (CN)**

(74) Representative: **Novagraaf Technologies**
**Bâtiment O2**
**2, rue Sarah Bernhardt**
**CS90017**
**92665 Asnières-sur-Seine Cedex (FR)**

(54) **ENERGY-SAVING COMPENSATION METHOD, AND ENERGY-SAVING COMPENSATION RECOVERY METHOD AND DEVICE**

(57)    An energy saving compensation method and device, and an energy saving compensation recovery method and device are provided. In the energy saving compensation method, under a condition that it is determined that energy saving of a radio network is required to be performed, a compensation base station and all base stations which are able to be completely or partially compensated by the compensation base station are selected as an energy saving base station combination (S102); and the base stations which are able to be completely compensated in the energy saving base station combination enter a dormant state, the base stations which are able to be partially compensated in the energy saving base station combination enter a shrinkage state, and the compensation base station enters a compensation state (S104). By the method, the problem of difficulty in implementation of an energy saving compensation manner in the related technology in a practical network is solved, high feasibility is achieved, a coverage conflict may also be avoided, and energy saving is implemented.

```
┌─────────────────────────────────────────────────┐
│ Under a condition that it is determined that     │
│ energy saving of a radio network is required to  │ ╱ S102
│ be performed, a compensation base station and    │
│ all base stations which are able to be           │
│ completely or partially compensated by the       │
│ compensation base station are selected as an     │
│ energy saving base station combination           │
└─────────────────────────────────────────────────┘
                        │
                        ▼
┌─────────────────────────────────────────────────┐
│ The base stations which are able to be           │
│ completely compensated in the energy saving      │ ╱ S104
│ base station combination enter a dormant state,  │
│ the base stations which are able to be partially │
│ compensated in the energy saving base station    │
│ combination enter a shrinkage state, and the     │
│ compensation base station enters a compensation  │
│ state                                            │
└─────────────────────────────────────────────────┘
```

**Fig. 1**

**Description**

**Technical Field**

The present disclosure relates to the field of communication, and more particularly to an energy saving compensation method and device, and an energy saving compensation recovery method and device.

**Background**

Along with great consumption of energy all around the world, green and energy saving requirements become more and more important. The communication industry, which has a relatively larger energy consumption ratio, also has green and energy saving requirements, particularly for base stations in mobile communication, the energy consumption of which occupies more than 70% of a mobile communication system. Therefore, energy saving of base stations is especially crucial.

For energy saving of a base station, there is a local energy saving technology for a single base station, such as carrier-level, channel-level and timeslot energy saving (such as Time Division-Synchronous Code Division Multiple Access (TD-SCDMA)) and symbol-level energy saving (such as Long Term Evolution (LTE)). For energy saving at the granularity of base station (some base stations are in a dormant state), an ordinary technology switches a base station with low traffic into a dormant state and implements coverage compensation of an original coverage area of the dormant base station by virtue of another base station or other base stations.

In fact, energy saving at the granularity of base station is very difficult to implement at present. The difficulty mainly lies in that it is difficult to flexibly implement regulation of coverage of base stations deployed throughout the world at present, therefore, when a base station is dormant, it is very difficult to regulate coverage of another base station or other base stations to compensate the coverage of the dormant base station. There may be multiple manners for regulating coverage of a base station, including regulating power, regulating an antenna down tilt angle and regulating an antenna height. Regulating the antenna height requires reconstruction, and is obviously infeasible. Antennae of a part of base stations have an electric tuning function, so that the base stations with the electrically tunable antennae may regulate the coverage of the base stations by regulating down tilt angles. In addition, 3rd-Generation (3G) and 4th-Generation (4G) base stations may extend their coverage by regulating power of broadcast channels, but power margins of service channels are not high. Therefore, both power regulation and down tilt angle regulation have relatively smaller spaces for regulating coverage of a base station within a large range, and when a base station is dormant, a few base stations are usually required for coverage compensation. Another problem lies in that coverage may be extended to another non-dormant base station, besides a dormant base station, when a compensation base station extends the coverage, a practical network is complicated, and such a condition is almost inevitable. Therefore, serious interference to an intra frequency networking system may be caused.

In a related technology, whether to turn off a base station (make the base station dormant) or not is judged according to whether the traffic of the base station is lower than a certain threshold or not, and if the traffic of the base station is lower than the certain threshold, the station is turned off. Then, an original coverage area of the base station is compensated by another base station or other base stations. Such a method has a certain limit: when the compensation base station compensates the coverage of the dormant station, a coverage compensation capability of the compensation base station may also affect another base station or other base stations besides the dormant station under a normal condition, and when the other base station or the other base stations is in a working state, a coverage conflict may be generated. How to avoid such a coverage conflict is not mentioned in the related technology.

Antenna of a massive Multiple Input Multiple Output (MIMO) base station adopts a massive array antenna, both horizontal and vertical planes have multiple ports open to active channels, and flexible beamforming of the horizontal and vertical planes may be implemented.

For the problem of difficulty in implementation of an energy saving compensation manner in the related technology in a practical network, there is yet no effective solution at present.

**Summary**

Embodiment of the present disclosure provide an energy saving compensation method and device, and an energy saving compensation recovery method and device, so as to at least solve the problem of difficulty in implementation of an energy saving compensation manner in the related technology in a practical network.

According to an embodiment of the present disclosure, an energy saving compensation method is provided, which may include that: under a condition that it is determined that energy saving of a radio network is required to be performed, a compensation base station and all base stations which are able to be completely or partially compensated by the compensation base station are selected as an energy saving base station combination; and the base stations which are able to be completely compensated in the energy saving base station combination enter a dormant state, the base stations which are able to be partially compensated in the energy saving base station combination enter a shrinkage state, and the compensation base station enters a compensation state.

The step that the compensation base station and all the base stations which are able to be completely or partially compensated by the compensation base station are selected as the energy saving base station combination under the condition that it is determined that energy saving of the radio network is required to be performed may include that: each compensation base station and all base stations which are able to be completely or partially compensated by the compensation base station form a candidate energy saving base station combination; and under the condition that it is determined that energy saving of the radio network is required to be performed, the energy saving base station combination is selected from multiple candidate energy saving base station combinations.

The step that the energy saving base station combination is selected from the multiple candidate energy saving base station combination may include that: a candidate energy saving base station combination of which compensated coverage traffic is lowest and lower than a first preset threshold is selected from the multiple candidate energy saving base station combinations as the energy saving base station combination.

The compensated coverage traffic may be traffic of the compensation base station and traffic of an area which is able to be compensated by the compensation base station.

The traffic of the area which is able to be compensated by the compensation base station may include: a sum of traffic of the base stations which are able to be completely compensated by the compensation base station and traffic of the base stations which are able to be partially compensated by the compensation base station, wherein the traffic of the base stations which are able to be completely compensated by the compensation base station may be: own traffic of the base stations which are able to be completely compensated by the compensation base station; and the traffic of the base stations which are able to be partially compensated by the compensation base station may be: a product of own traffic of the base stations which are able to be partially compensated by the compensation base station and a ratio of an area compensated by the compensation base station to a service area of the base stations which are able to be partially compensated by the compensation base station; or, traffic, statistically obtained by estimating positions of users by virtue of an uplink forming capability of a massive MIMO base station, of the area which is able to be compensated by the compensation base station.

The step that the compensation base station is selected may include that: a base station in a normal state is selected from all base stations in a current area or a base station in the normal state is selected from preset base stations among all the base stations in the current area as a candidate compensation base station.

The preset base stations may include: base stations selected according to network planning and network optimization and statistics about historical traffic, wherein selecting the preset base stations as compensation base stations does not cause a coverage conflict and is able to meet a requirement of traffic during energy saving.

The method may further include that: under a condition that it is determined that energy saving of the radio network is required to be released, the compensation base station of which the compensated coverage traffic is higher than a second preset threshold is released from the compensation state, and states of all the base stations which are able to be completely or partially compensated by the compensation base station in the energy saving base station combination to which the compensation base station belongs are recovered back into states before compensation.

The second preset threshold may not be higher than maximum traffic which is able to be borne by the compensation base station.

According to another embodiment of the present disclosure, an energy saving compensation recovery method is provided, which may include that: under a condition that it is determined that energy saving of a radio network is required to be released, an energy saving base station combination in a compensation state is selected, wherein the energy saving base station combination may include a compensation base station and all base stations which are able to be completely or partially compensated by the compensation base station; and states of all the base stations which are able to be completely or partially compensated by the compensation base station in the energy saving base station combination are recovered back into states before compensation.

According to another embodiment of the present disclosure, an energy saving compensation device is provided, which may include: a first selection module, arranged to, under a condition that it is determined that energy saving of a radio network is required to be performed, select a compensation base station and all base stations which are able to be completely or partially compensated by the compensation base station as an energy saving base station combination; and a compensation module, arranged to make the base stations, which are able to be completely compensated in the energy saving base station combination, enter a dormant state, make the base stations, which are able to be partially compensated in the energy saving base station combination, enter a shrinkage state, and make the compensation base station enter a compensation state.

According to another embodiment of the present disclosure, an energy saving compensation recovery device is further provided, which may include: a second selection module, arranged to, under a condition that it is determined that energy saving of a radio network is required to be released, select an energy saving base station combination in a compensation state, wherein the energy saving base station combination may include a compensation base station and all base stations which are able to be completely or partially compensated by the compensation base station; and a compensation recovery module, arranged to recover states of all the base stations, which are able to be completely or partially compensated by the compensation base station in the energy saving base station combination, back into states before compensation.

According to the embodiments of the present disclosure, a compensation base station and all the base stations which are able to be completely or partially compensated by the compensation base station are selected as the energy saving base station combination under a condition that it is determined that energy saving of the radio network is required to be performed, the base stations which are able to be completely compensated in the energy saving base station combination are made to enter the dormant state, the base stations which are able to be partially compensated in the energy saving base station combination are made to enter the shrinkage state and the compensation base station is made to enter the compensation state. By virtue of the technical solution, the problem of difficulty in implementation of an energy saving compensation manner in the related technology in a practical network is solved, high feasibility is achieved, a coverage conflict may also be avoided, and energy saving of the radio network is implemented.

## Brief Description of the Drawings

The drawings described here are adopted to provide further understanding of the present disclosure, and form a part of the present disclosure. Schematic embodiments of the present disclosure and descriptions thereof are adopted to explain the present disclosure and not intended to form improper limits to the present disclosure. In the drawings:

Fig. 1 is a flowchart of an energy saving compensation method according to an embodiment of the present disclosure;

Fig. 2 is a structure block diagram of an energy saving compensation device according to an embodiment of the present disclosure;

Fig. 3 is a flowchart of an energy saving compensation recovery method according to an embodiment of the present disclosure;

Fig. 4 is a structure block diagram of an energy saving compensation recovery device according to an embodiment of the present disclosure;

Fig. 5 is a flowchart of an energy saving method for a radio access network according to an exemplary embodiment of the present disclosure;

Fig. 6 is a flowchart of determining candidate energy saving base station combinations in an energy saving method for a radio access network according to an exemplary embodiment of the present disclosure;

Fig. 7 is a schematic diagram of a state of a single-system macro cell network topology model for simulation before energy saving according to an exemplary embodiment of the present disclosure;

Fig. 8(a) is an E-plane directional diagram of a broadcast beam of a compensation base station before compensation (normal state) according to an exemplary embodiment of the present disclosure;

Fig. 8(b) is an E-plane directional diagram of a broadcast beam of a compensation base station after compensation (compensation state) according to an exemplary embodiment of the present disclosure;

Fig. 9(a1) is a first schematic diagram of a network topology model of a partially compensated area for simulation according to an exemplary embodiment of the present disclosure;

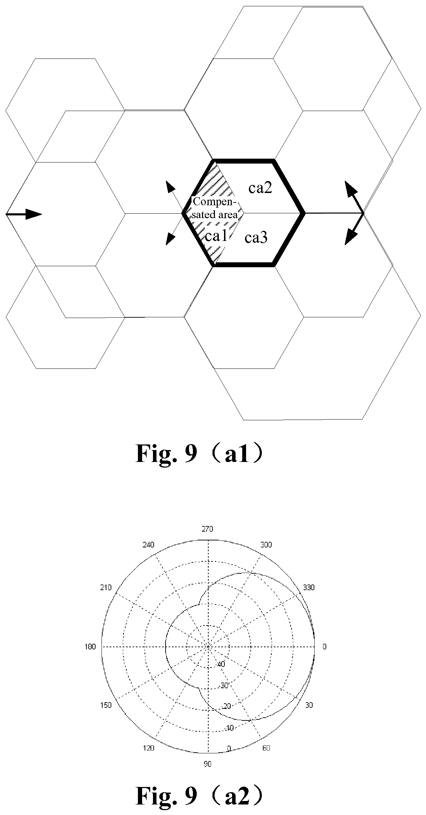

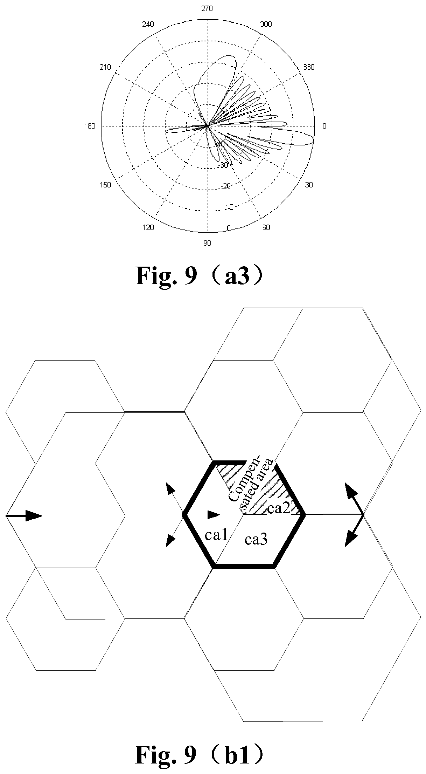

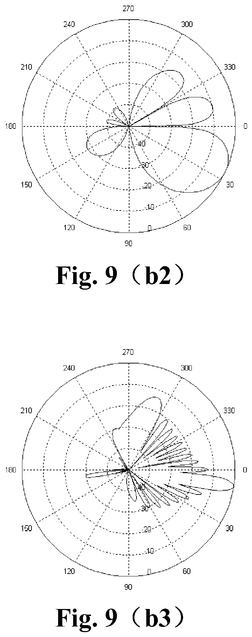

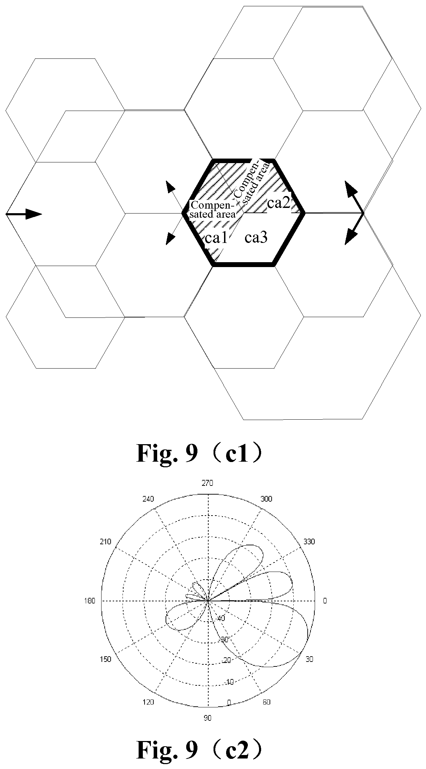

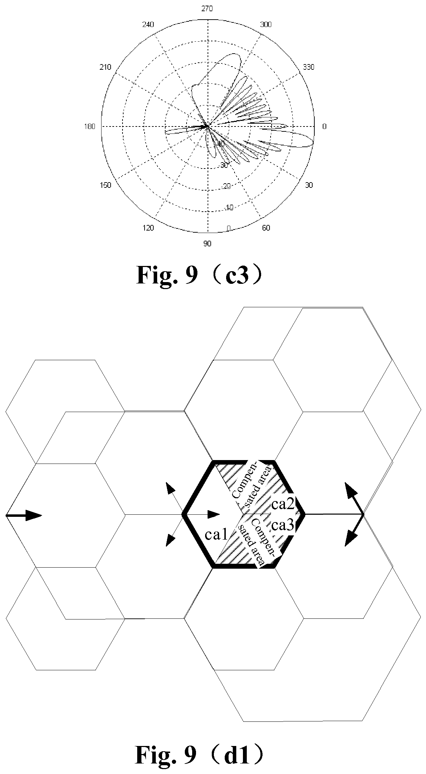

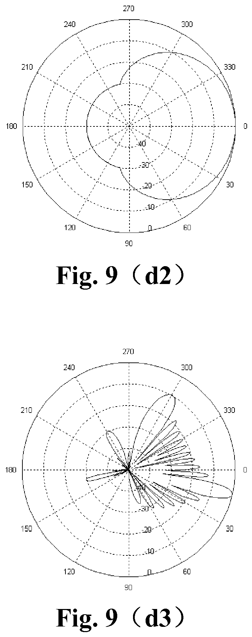

Fig. 9(a2) is a first H-plane directional diagram of a regulated broadcast beam of a partially compensated base station according to an exemplary embodiment of the present disclosure;

Fig. 9(a3) is a first E-plane directional diagram of a regulated broadcast beam of a partially compensated base station according to an exemplary embodiment of the present disclosure;

Fig. 9(b1) is a second schematic diagram of a network topology model of a partially compensated area for simulation according to an exemplary embodiment of the present disclosure;

Fig. 9(b2) is a second H-plane directional diagram of a regulated broadcast beam of a partially compensated base station according to an exemplary embodiment of the present disclosure;

Fig. 9(b3) is a second E-plane directional diagram of a regulated broadcast beam of a partially compensated base station according to an exemplary embodiment of the present disclosure;

Fig. 9(c1) is a third schematic diagram of a network topology model of a partially compensated area for simulation according to an exemplary embodiment of the present disclosure;

Fig. 9(c2) is a third H-plane directional diagram of a regulated broadcast beam of a partially compensated base station according to an exemplary embodiment of the present disclosure;

Fig. 9(c3) is a third E-plane directional diagram of a regulated broadcast beam of a partially compensated base station according to an exemplary embodiment of the present disclosure;

Fig. 9(d1) is a fourth schematic diagram of a network topology model of a partially compensated area for simulation according to an exemplary embodiment of the present disclosure;

Fig. 9(d2) is a fourth H-plane directional diagram of a regulated broadcast beam of a partially compensated base station according to an exemplary embodiment of the present disclosure;

Fig. 9(d3) is a fourth E-plane directional diagram of a regulated broadcast beam of a partially compensated base station according to an exemplary embodiment of the present disclosure;

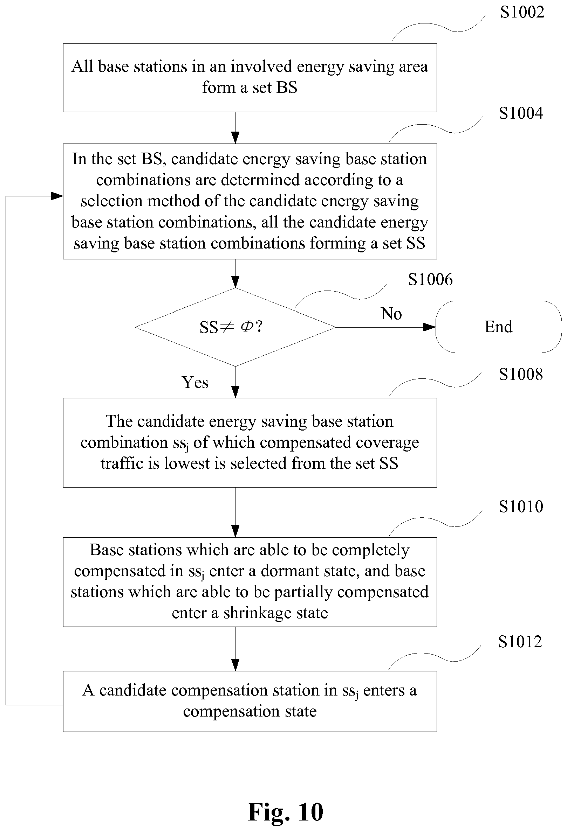

Fig. 10 is a logical flowchart of energy saving of an energy saving method for a radio access network when traffic is decreased according to an exemplary embodiment of the present disclosure;

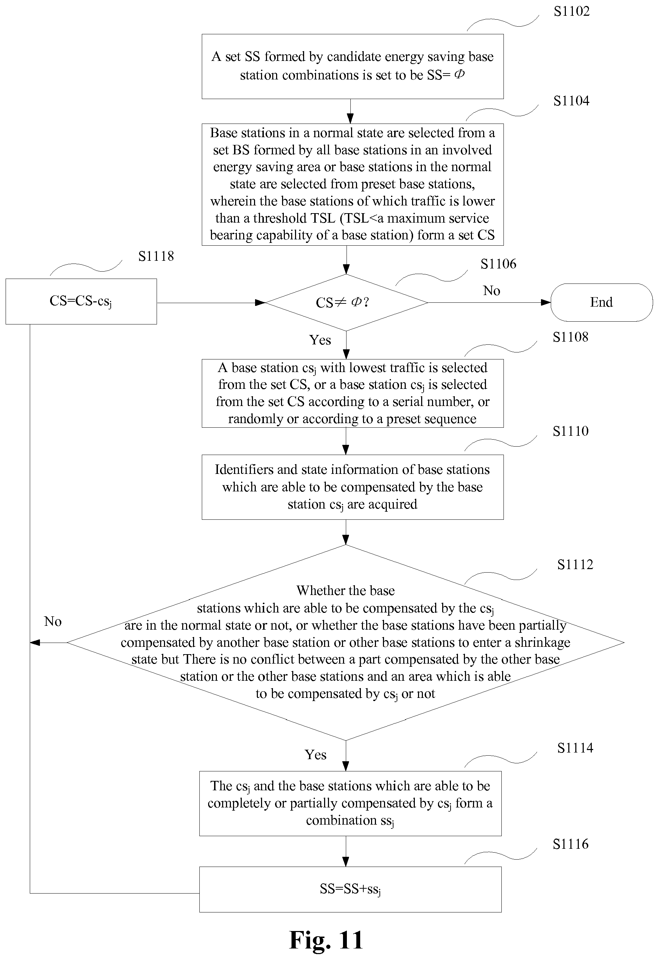

Fig. 11 is a logical flowchart of selecting candidate energy saving base station combinations in an energy saving method for a radio access network according to an exemplary embodiment of the present disclosure;

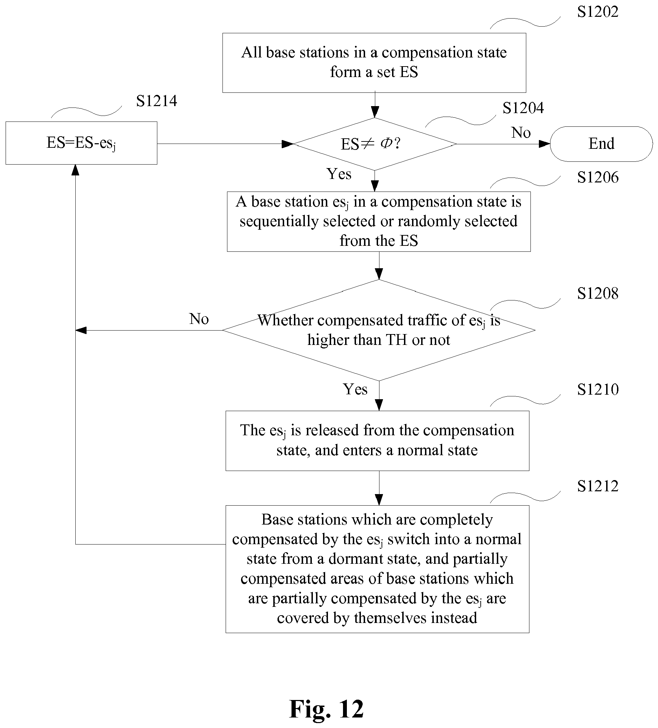

Fig. 12 is a logical flowchart of releasing energy saving of an energy saving method for a radio access network when traffic is increased according to an exemplary embodiment of the present disclosure; and

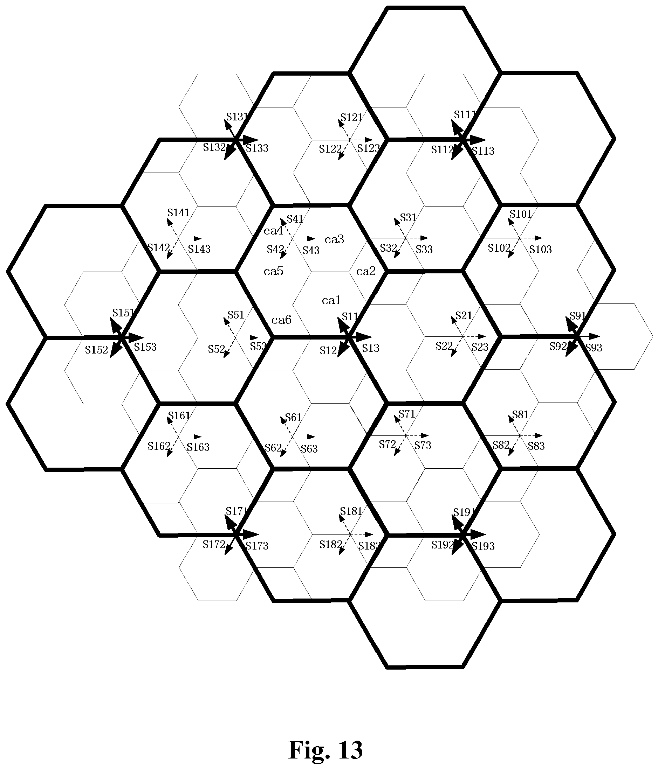

Fig. 13 is a schematic diagram of a state of a single-system macro cell network topology model for simulation after energy saving according to an exemplary embodiment of the present disclosure.

## Detailed Description of the Embodiments

The present disclosure will be described below with reference to the drawings and embodiments in detail. It is important to note that the embodiments in the present disclosure and characteristics in the embodiments may be combined under a condition of no conflicts.

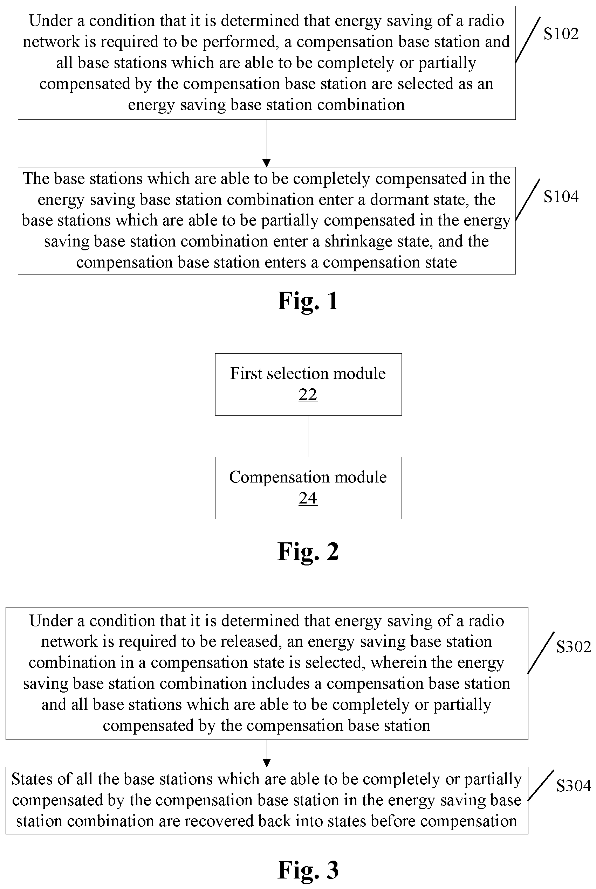

In the embodiment, an energy saving compensation method is provided. Fig. 1 is a flowchart of an energy saving compensation method according to an embodiment of the present disclosure. As shown in Fig. 1, the method includes the following steps:

Step S102: under a condition that it is determined that energy saving of a radio network is required to be performed, a compensation base station and all base stations which are able to be completely or partially compensated by the compensation base station are selected as an energy saving base station combination; and

Step S104: the base stations which are able to be completely compensated in the energy saving base station combination enter a dormant state, the base stations which are able to be partially compensated in the energy saving base station combination enter a shrinkage state, and the compensation base station enters a compensation state.

By the steps, the compensation base station and all the base stations which are able to be completely or partially compensated by the compensation base station are selected as the energy saving base station combination, and then energy saving is performed by taking the energy saving base station combination as a unit. Since an energy saving base station combination includes all base stations which may be covered by a compensation base station, compensation with the energy saving base station combination as the unit does not affect other base stations which work normally except the compensation base station. Energy saving with the energy saving base station combination as the unit is easy to implement. The problem of difficulty in implementation of an energy saving compensation manner in the related technology in a practical network is solved, high feasibility is achieved, a coverage conflict may also be avoided, and energy saving of the radio network is implemented.

In Step S102, for how to determine that energy saving of the radio network is required to be triggered when traffic is decreased, there have been multiple manners for determining triggering in the related technology, so that no repeated descriptions will be made in the embodiment. In an exemplary embodiment, the compensation base station and compensated base stations in the embodiment may all use massive MIMO base stations, and using such base stations for compensation or being compensated facilitates calculation and control of compensated coverage and may achieve better compensation effects.

In an exemplary embodiment, when the energy saving base station combination is selected, if there exist multiple combinations of compensation base stations and all base stations which are able to be completely or partially compensated by the compensation base stations, each compensation base station and all the base stations which are able to be completely or partially compensated by the compensation base station may form a candidate energy saving base station combination. Under a condition that it is determined that energy saving of the radio network is required to be performed, an energy saving base station combination is selected from multiple candidate energy saving base station combinations.

In an exemplary embodiment, the energy saving base station combination may be selected from the multiple candidate energy saving base station combination in a manner as follows: a candidate energy saving base station combination of which compensated coverage traffic is lowest and lower than a first preset threshold is selected from the multiple candidate energy saving base station combinations as the energy saving base station combination.

The compensated coverage traffic may be traffic of the compensation base station and traffic of an area which is able to be compensated by the compensation base station. In a specific calculation manner, the traffic of the area which is able to be compensated by the compensation base station may include: a sum of traffic of the base stations which are able to be completely compensated by the compensation base station and traffic of the base stations which are able to be partially compensated by the compensation base station. The traffic of the base stations which are able to be completely compensated by the compensation base station is: own traffic of the base stations which are able to be completely compensated by the compensation base station. The traffic of the base stations which are able to be partially compensated by the compensation base station is: a product of own traffic of the base stations which are able to be partially compensated by the compensation base station and a ratio of an area compensated by the compensation base station to a service area of the base stations which are able to be partially compensated by the compensation base station; or, traffic, statistically obtained by estimating positions of users by virtue of an uplink forming capability of a massive MIMO base station, of the area which is able to be compensated by the compensation base station. It is important to note that the compensated coverage traffic of the selected candidate energy saving base station combination is consistent before compensation and after compensation and the only difference is the bearing base station. Specifically, before compensation, the compensated coverage traffic includes the traffic of a coverage area of the compensation base station and traffic of the area which is able to be compensated by the compensation base station, wherein the traffic of the area which is able to be compensated is borne by the compensated base stations before compensation. After compensation: the compensated coverage traffic is still the traffic of the related areas, but is entirely borne by the base station in the compensation state (the compensation base station).

As an exemplary implementation mode, the compensation base station may be selected in a manner as follows: a base station in a normal state is selected from all base stations in a current area or a base station in the normal state is selected from preset base stations among all the base stations in the current area as a candidate compensation base station. The preset base stations mentioned here may include: base stations selected according to network planning and network optimization and statistics about historical traffic, wherein selecting the preset base stations as compensation base stations (also called compensation stations hereinafter) does not cause a coverage conflict and is able to meet a requirement of traffic during energy saving.

In an exemplary embodiment, after compensation, along with increase of the traffic, the increase compensation state may also be released according to a manner as follows: under a condition that it is determined that energy saving of the radio network is required to be released, the compensation base station of which the compensated coverage traffic is higher than a second preset threshold is released from the compensation state, and states of all the base stations which are able to be completely or partially compensated by the compensation base station in the energy saving base station combination to which the compensation base station belongs are recovered back into states before compensation.

The second preset threshold is not higher than maximum traffic which is able to be borne by the compensation base station. In an exemplary embodiment, the second preset threshold is higher than the first preset threshold.

Corresponding to the abovementioned energy saving compensation method, an embodiment further provides an energy saving compensation device, which is configured to implement the abovementioned embodiment and exemplary implementation modes, and what has been described will not be elaborated. For example, term "module", used below, may be a combination of software and/or hardware capable of realizing a preset function. Although the device described in the following embodiment is preferably implemented with software, implementation with hardware or a combination of software and hardware is also possible and conceivable.

Fig. 2 is a structure block diagram of an energy saving compensation device according to an embodiment of the present disclosure. As shown in Fig. 2, the device includes a first selection module 22 and a compensation module 24. Each module will be described below in detail.

The first selection module 22 is arranged to, under a condition that it is determined that energy saving of a radio network is required to be performed, select a compensation base station and all base stations which are able to be completely or partially compensated by the compensation base station as an energy saving base station combination; and the compensation module 24 is connected with the first selection module 22, and is arranged to make the base stations, which are able to be completely compensated in the energy saving base station combination, enter a dormant state, make the base stations, which are able to be partially compensated in the energy saving base station combination, enter a shrinkage state, and make the compensation base station enter a compensation state.

In the embodiment, an energy saving compensation recovery method is further provided. Fig. 3 is a flowchart of an energy saving compensation recovery method according to an embodiment of the present disclosure. As shown in Fig. 3, the method includes the following steps:

Step S302: under a condition that it is determined that energy saving of a radio network is required to be released, an energy saving base station combination in a compensation state is selected, wherein the energy saving base station combination includes a compensation base station and all base stations which are able to be completely or partially compensated by the compensation base station; and

Step S304: states of all the base stations which are able to be completely or partially compensated by the compensation base station in the energy saving base station combination are recovered back into states before compensation.

According to the embodiment, by the steps, the compensation base station and all the base stations which are able to be completely or partially compensated by the compensation base station are selected as the energy saving base station combination, and then compensation recovery is performed by taking the energy saving base station combination as a unit. Since an energy saving base station combination includes all base stations which may be covered by a compensation base station, compensation and recovery with the energy saving base station combination as the unit does not affect other base stations which work normally except the compensation base station. Energy saving and recovery with the energy saving base station combination as the unit is easy to implement. The problem of difficulty in implementation of an energy saving compensation manner in the related technology in a practical network is solved, high feasibility is achieved, a coverage conflict may also be avoided, and energy saving of the radio network is implemented.

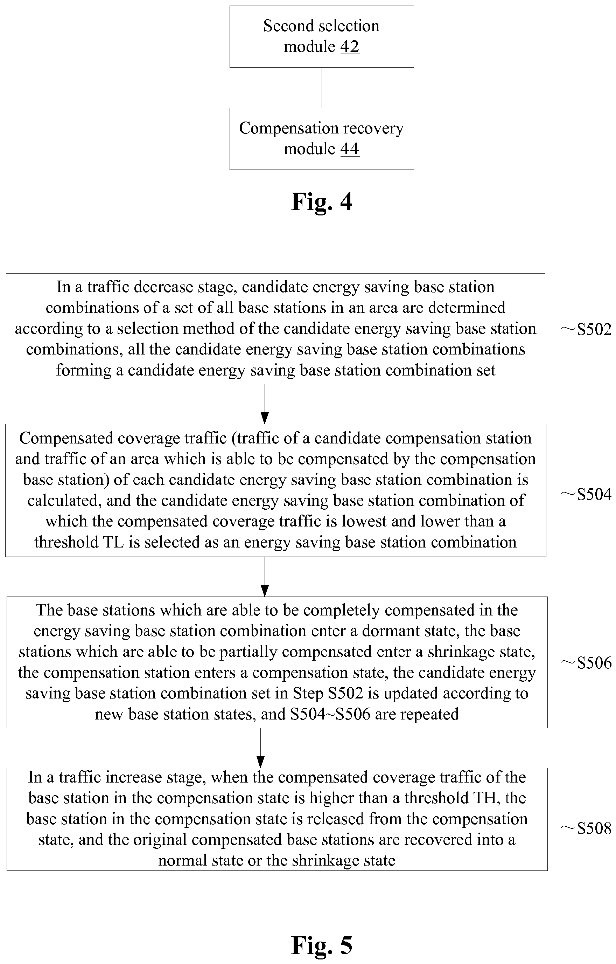

Corresponding to the abovementioned energy saving compensation recovery method, an embodiment further provides an energy saving compensation recovery device. Fig. 4 is a structure block diagram of an energy saving compensation recovery device according to an embodiment of the present disclosure. As shown in Fig. 4, the device includes a second selection module 42 and a compensation recovery module 44. Each module will be described below in detail.

The second selection module 42 is arranged to, under a condition that it is determined that energy saving of a radio network is required to be released, select an energy saving base station combination in a compensation state, wherein the energy saving base station combination includes a compensation base station and all base stations which are able to be completely or partially compensated by the compensation base station; and the compensation recovery module 44 is connected with the second selection module 42, and is arranged to recover states of all the base stations, which are able to be completely or partially compensated by the compensation base station in the energy saving base station combination, back into states before compensation.

Descriptions will be made below with reference to an exemplary embodiment, and the following exemplary embodiment combines the abovementioned embodiment and exemplary implementation modes thereof.

The following exemplary embodiment provides an energy saving method and base station for a mobile communication system, and particularly relates to energy saving and network coverage of a massive MIMO system.

Energy saving at the granularity of base station in the exemplary embodiment is mainly intended to solve the following technical problems: 1) how to make a base station dormant or activated according to a change of traffic in a radio access network, thereby achieving a purpose of energy saving of the network; 2) the problem of interference increase caused by coverage conflict usually existing after dormancy and compensation of a base station is solved; 3) the problem of inflexibility in coverage regulation during coverage compensation or shrinkage of a base station is solved.

In order to solve the abovementioned problems, the exemplary embodiment provides an improved energy saving method for a radio network. In a cellular network area with multiple base stations, the method includes that: in a traffic decrease stage, a candidate energy saving base station combination of which compensated coverage traffic is lowest and lower than a threshold TL is selected as an energy saving base station combination; and base stations which are able to be completely compensated in the energy saving base station combination enter a dormant state, base stations which are able to be partially compensated in the energy saving base station combination enter a shrinkage state, and meanwhile, a compensation base station enters a compensation state.

When compensated coverage traffic of the base station in the compensation state is higher than the threshold TL in a traffic increase stage, the base station in the compensation state is released from the compensation state, and the original compensated base stations are recovered into a normal state or the shrinkage state.

Furthermore, the candidate energy saving base station combination includes the base stations determined according to a selection method of the candidate energy saving base station combinations in the cellular network area.

Furthermore, the selection method of the candidate energy saving base station combinations may be as follows: a base station in the normal state is selected from all base stations in the area or a base station in the normal state is selected from preset base stations among all the base stations in the current area as a candidate compensation station; all base stations which are able to be completely or partially compensated by the base station are acquired according to a compensation capability of the candidate compensation station.

If the base stations which are able to be compensated are in the normal state, or have been partially compensated by another base station or other base stations to enter the shrinkage state but there is no conflict between the part compensated by the other base station or the other base stations and an area which is able to be compensated by the candidate compensation station, the candidate compensation station and all the base stations which are able to be compensated by the candidate compensation station form an effective candidate energy saving base station combination, all candidate energy saving base station combinations form a candidate energy saving base station combination set.

In an exemplary embodiment, the preset base stations may be a group of base stations selected according to network planning and network optimization and statistics about historical traffic, the group of base stations serve as compensation stations, and the group of base stations have no coverage conflicts in the compensation state and are able to meet a requirement of traffic during energy saving.

Furthermore, an energy saving traffic threshold TL is required to be lower than maximum traffic which may be borne by the candidate compensation station, and the TL is usually required to be lower than an energy saving releasing traffic threshold TH.

Furthermore, the energy saving releasing traffic threshold TH is not higher than the maximum traffic which may be borne by the compensation station.

In an exemplary embodiment, the base stations of the cellular network area adopt massive MIMO base stations, and a purpose of regulating coverage more flexibly is achieved by virtue of their horizontal and vertical forming capabilities.

Furthermore, the compensated coverage traffic includes traffic of the candidate compensation station and traffic of the area which is able to be compensated by the compensation base station.

The following energy saving steps are adopted.

Step A: in a traffic decrease stage, candidate energy saving base station combinations in a set of all base stations in the area are determined according to a selection method of the candidate energy saving base station combinations, all the candidate energy saving base station combinations forming a candidate energy saving base station combination set.

Step B: compensated coverage traffic (traffic of a candidate compensation station and traffic of an area which is able to be compensated by the compensation base station) of each candidate energy saving base station combination is calculated, and the candidate energy saving base station combination of which the compensated coverage traffic is lowest and lower than a threshold TL is selected as an energy saving base station combination.

Step C: the base stations which are able to be completely compensated in the energy saving base station combination enter a dormant state, the base stations which are able to be partially compensated enter a shrinkage state, the compensation station enters a compensation state, the candidate energy saving base station combination set in Step A is updated according to new base station states, and Steps B~C are repeated.

Step D: in a traffic increase stage, when the compensated coverage traffic of the base station in the compensation state is higher than a threshold TH, the base station in the compensation state is released from the compensation state, and the original compensated base stations are recovered into a normal state or the shrinkage state.

In Step A, the selection method of the candidate energy saving base station combinations may be as follows:

A1: a base station in the normal state is selected from all the base stations in the area or a base station in the normal state is selected from preset base stations among all the base stations in the area as a candidate compensation station;

A2: all base stations which are able to be completely or partially compensated by the base station are acquired according to a compensation capability of the candidate compensation station; and

A3: if the base stations which are able to be compensated are in the normal state, or have been partially compensated by another base station or other base stations to enter the shrinkage state but there is no conflict between the part compensated by the other base station or the other base stations and an area which is able to be compensated by the candidate compensation station, the candidate compensation station and all the base stations which are able to be compensated by the candidate compensation station form an effective candidate energy saving base station combination, all the candidate energy saving base station combinations form the candidate energy saving base station combination set.

In Step A1, the preset base stations may preferably be a group of base stations selected according to network planning and network optimization and statistics about historical traffic, the group of base stations serve as compensation stations, and the group of base stations have no coverage conflicts in the compensation state and are able to meet a requirement of traffic during energy saving.

In Step B, the energy saving traffic threshold TL may be lower than maximum traffic which may be borne by the candidate compensation station, and in an exemplary embodiment, in order to prevent frequent switching between energy saving and energy saving releasing, the TL is usually lower than the energy saving releasing traffic threshold TH.

In Step D, the energy saving releasing traffic threshold TH may not be higher than the maximum traffic which may be borne by the compensation station.

In an exemplary embodiment, the base stations of the cellular network area may adopt massive MIMO base stations, and a purpose of regulating coverage more flexibly is achieved by virtue of their horizontal and vertical forming capabilities.

According to the exemplary embodiment, the purpose of energy saving of the radio access network is achieved by the energy saving method; cooperation of coverage of the compensation station and all the base stations which are affected by the compensation station is comprehensively considered, so that the coverage conflict is avoided, and interference is reduced; and in addition, the massive MIMO base stations may be adopted, so that the coverage of the base stations may be regulated more flexibly.

The energy saving method of the exemplary embodiment will be described below with reference to the drawings in detail.

Fig. 5 is a flowchart of an energy saving method for a radio access network according to an exemplary embodiment of the present disclosure. As shown in Fig. 5, the method includes the following steps.

Step S502: in a traffic decrease stage, candidate energy saving base station combinations of a set of all base stations in an area are determined according to a selection method of the candidate energy saving base station combinations, all the candidate energy saving base station combinations forming a candidate energy saving base station combination set.

Step S504: compensated coverage traffic (traffic of a candidate compensation station and traffic of an area which is able to be compensated by the compensation base station) of each candidate energy saving base station combination is calculated, and the candidate energy saving base station combination of which the compensated coverage traffic is lowest and lower than a threshold TL is selected as an energy saving base station combination.

Step S506: the base stations which are able to be completely compensated in the energy saving base station combination enter a dormant state, the base stations which are able to be partially compensated enter a shrinkage state, the compensation station enters a compensation state, the candidate energy saving base station combination set in Step S502 is updated according to new base station states, and S504~S506 are repeated.

Step S508: in a traffic increase stage, when the compensated coverage traffic of the base station in the compensation state is higher than a threshold TH, the base station in the compensation state is released from the compensation state, and the original compensated base stations are recovered into a normal state or the shrinkage state.

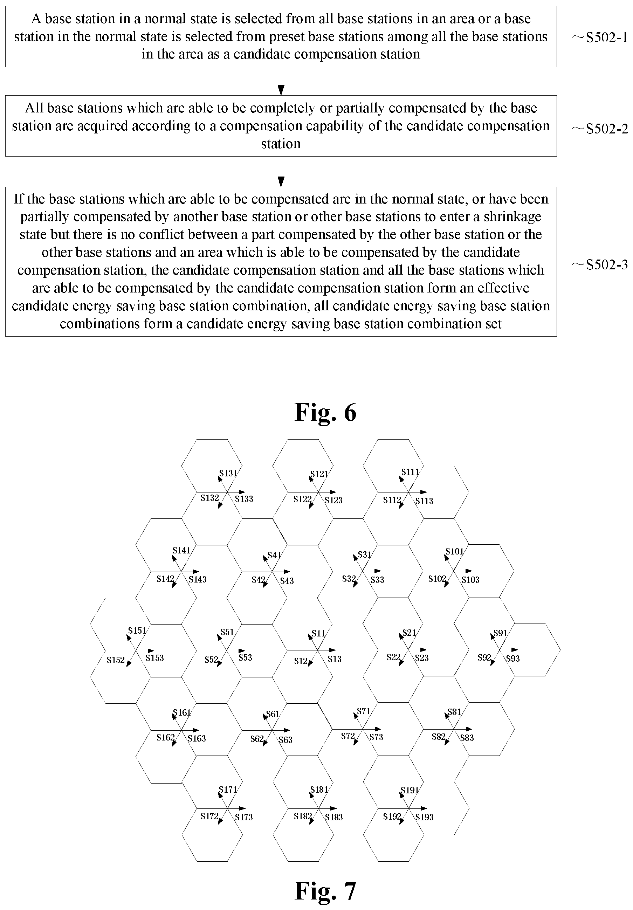

Fig. 6 is a flowchart of determining candidate energy saving base station combinations in an energy saving method for a radio access network according to an exemplary embodiment of the present disclosure. As shown in Fig. 6, in Step S502, the selection method of the candidate energy saving base station combinations includes the following steps:

Step S502-1: a base station in the normal state is selected from all the base stations in the area or a base station in the normal state is selected from preset base stations among all the base stations in the area as a candidate compensation station;

Step S502-2: all base stations which are able to be completely or partially compensated by the base station are acquired according to a compensation capability of the candidate compensation station; and

Step S502-3: if the base stations which are able to be compensated are in the normal state, or have been partially compensated by another base station or other base stations to enter the shrinkage state but there is no conflict between the part compensated by the other base station or the other base stations and an area which is able to be compensated by the candidate compensation station, the candidate compensation station and all the base stations which are able to be compensated by the candidate compensation station form an effective candidate energy saving base station combination, all the candidate energy saving base station combinations form the candidate energy saving base station combination set.

In Step S502-1, the preset base stations are preferably a group of base stations selected according to network planning and network optimization and statistics about historical traffic, the group of base stations serve as compensation stations, and the group of base stations have no coverage conflicts in the compensation state and are able to meet a requirement of traffic during energy saving.

In Step S504, when the base stations which may only be partially compensated in the compensated coverage traffic have yet not been compensated and still implements coverage by itself, statistics about the traffic of the area which are able to be partially compensated may be made in, but not limited to, the following manners.

Manner 1: the traffic of the area which are able to be partially compensated=total traffic of the partially compensated base stations x (the area of the partially compensated area)/(a total coverage area of the partially compensated base stations).

Manner 2: positions of users are estimated by virtue of an uplink forming capability of a massive MIMO base station, thereby statistically obtaining the traffic of the area which are able to be partially compensated by the candidate compensation station.

In Step S504, the energy saving traffic threshold TL is required to be lower than maximum traffic which may be borne by the candidate compensation station, and in an exemplary embodiment, in order to prevent frequent switching between energy saving and energy saving releasing, the TL is usually lower than the energy saving releasing traffic threshold TH.

In an exemplary embodiment, the base stations of the cellular network area may adopt massive MIMO base stations, and a purpose of regulating coverage more flexibly is achieved by virtue of their horizontal and vertical forming capabilities.

Fig. 7 is a schematic diagram of a state of a single-system macro cell network topology model for simulation before energy saving according to an exemplary embodiment of the present disclosure. In the exemplary embodiment, the single-system macro cell network topology model shown in Fig. 7 is adopted for simulation, and the model includes 19 stations, each station includes 3 sectors, and there are totally 57 sectors. A base station in the method of the exemplary embodiment corresponds to a sector in the model. Related parameters are set as follows:

system: Time Division-Long Term Evolution (TD-LTE);
bandwidth: 10MHz;
frequency point: 2,000MHz;
Reference Signal (RS) power: 18dBm;
path loss model: 128.1+37.6lg(R), R in km;
shadow shading margin: 10dB;
station height: 30m;
sending gain of an antenna of the base station: 15dBi;
receiving gain of an antenna of User Equipment (UE): 0dBi;
vertical broadcast beam width of the base station: 5.6° ; and
cell coverage distance: 300m.

It is supposed that users in a cell are uniformly distributed, and the probability that coverage is consistent with a required standard of Reference Signal Receiving Power (RSRP) of -105dBm is more than 95%.

The state of the model before energy saving is shown in Fig. 7, and according to the model parameters and a universal coverage calculation method: RSRP of a cell edge is equal to -88.51dBm and higher than -105dBm, and meets a coverage requirement. A required antenna down tilt angle is 7.7° , and may be achieved by presetting a mechanical downward inclination 0° and a broadcast vertical forming downward inclination 7.7°.

Fig. 13 is a schematic diagram of a state of a single-system macro cell network topology model for simulation after energy saving according to an exemplary embodiment of the present disclosure. As shown in Fig. 13, the state after energy saving may be obtained by virtue of the method of the exemplary embodiment, for example, by presetting a compensation base station and a dormant base station. Coverage of the compensation base station/cell is extended to 600m, and according to model parameters and a universal coverage calculation method:

RSRP of a cell edge is equal to -99.78dBm and higher than -105dBm, and meets a coverage requirement. A required antenna down tilt angle is 5.3°, and may be achieved by presetting a mechanical downward inclination 0° and a broadcast vertical forming downward inclination 5.3°.

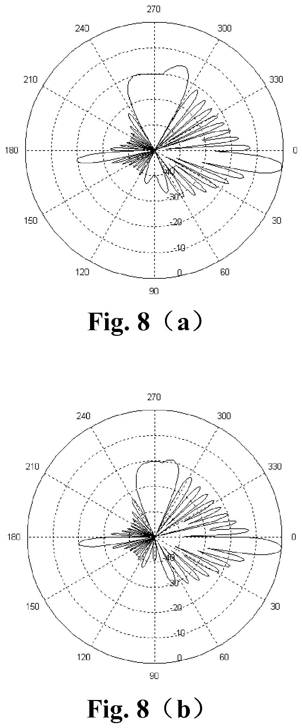

In simulated network topology, a base station adopts a massive MIMO system, and a configuration of a massive MIMO array antenna includes 4 horizontal ports and 10 vertical ports. Before compensation, a weight of a vertical array adopts [1 1 1 1 1 1 1 1 1 1;0 43.41 86.82 130.23 173.65 -142.94 -99.53 -56.12 -12.71 30.7], the weight after compensation adopts [1 1 1 1 1 1 1 1 1 1;0 29.93 59.86 89.78 119.71 149.64 179.57 -150.5 -120.58 -90.65], the first 10 parameters of the weight form an amplitude weight, the latter 10 parameters form a phase weight, and degree is adopted as a unit. Fig. 8(a) and (b) are E-plane directional diagrams of a broadcast beam of a compensation base station before compensation (normal state) and after compensation (compensation state) according to an exemplary embodiment of the present disclosure respectively, and the E-plane directional diagrams of the broadcast beam of the compensation base station before compensation (the normal state) and after compensation (the compensation state) are shown in Fig. 8(a) and (b) respectively.

In order to describe coverage shrinkage flexibility of massive MIMO, Fig. 9 shows some H-plane and E-plane directional diagrams of a regulated broadcast beam of a partially compensated base station according to an exemplary embodiment of the present disclosure respectively. In Fig. 9(a1), a compensated area is ca1, its own coverage area is ca2+ca3 after coverage shrinkage, and Fig. 9(a2) and (a3) are H-plane and E-plane directional diagrams of the regulated broadcast beam under such a compensation condition respectively. In Fig. 9(b1), a compensated area is ca2, its own coverage area is ca1+ca3 after coverage shrinkage, and Fig. 9(b2) and (b3) are H-plane and E-plane directional diagrams of the regulated broadcast beam under such a compensation condition respectively. In Fig. 9(c1), a compensated area is ca1+ca2, its own coverage area is ca3 after coverage shrinkage, and Fig. 9(c2) and (c3) are H-plane and E-plane directional diagrams of the regulated broadcast beam under such a compensation condition respectively. In Fig. 9(d1), a compensated area is ca2+ca3, its own coverage area is ca1 after coverage shrinkage, and Fig. 9(d2) and (d3) are H-plane and E-plane directional diagrams of the regulated broadcast beam under such a compensation condition respectively.

Specifically, in a service of the exemplary embodiment, Fig. 10 is a logical flowchart of energy saving of an energy saving method for a radio access network when traffic is decreased according to an exemplary embodiment of the present disclosure. The logical flowchart of energy saving is shown in Fig. 10, and mainly judges whether to perform energy saving or not by monitoring traffic of an effective candidate energy saving base station combination.

In Step S1002, all base stations in an involved energy saving area form a set BS.

In Step S1004, in the set BS, candidate energy saving base station combinations are determined according to a selection method of the candidate energy saving base station combinations, all the candidate energy saving base station combinations forming a set SS.

In Step S1006, the set SS is judged, the flow is ended if the SS is null, and if the SS is not null, Step S1008 is executed.

In Step S1008, the candidate energy saving base station combination $ss_j$ of which compensated coverage traffic is lowest is selected from the set SS.

In Step S1010, base stations which are able to be completely compensated in $ss_j$ enter a dormant state, and base stations which are able to be partially compensated enter a shrinkage state.

In Step S1012, a candidate compensation station in $ss_j$ enters a compensation state.

After the selected candidate energy saving base station combination $ss_j$ enters an energy saving state, that is, the compensation station enters the compensation state and the compensated base stations enter the dormant state or the shrinkage state, $ss_j$ does not exist in the set SS any longer, but the compensated base stations in $ss_j$ may also be in a normal state before energy saving, and are also consistent with a condition of serving as candidate compensation stations. Under such a condition, after energy saving of $ss_j$, not only $ss_j$ does not exist in the SS, but also candidate energy saving combinations corresponding to the compensated stations in $ss_j$ serving as candidate compensation stations do not exist. Therefore, after Step S1012, Step S1004 is required to be re-executed to update the set SS formed by the candidate energy saving base station combinations rather than simply reducing $ss_j$ from the SS.

Fig. 11 is a logical flowchart of selecting candidate energy saving base station combinations in an energy saving method for a radio access network according to an exemplary embodiment of the present disclosure. As shown in Fig. 11, a logical flow is as follows.

In Step S1102, a value of a set SS formed by candidate energy saving base station combinations is set to be null.

In Step S1104, base stations in a normal state are selected from a set BS formed by all base stations in an involved energy saving area or base stations in the normal state are selected from preset base stations, wherein the base stations of which traffic is lower than a threshold TSL (TSL<a maximum service bearing capability of a base station) form a set CS.

In Step S1106, the set CS is judged, the flow is ended if the CS is null, and if the CS is not null, Step S1108 is executed.

In Step S1108, a base station $cs_j$ with lowest traffic is selected from the set CS, or a base station $cs_j$ is selected from the set CS according to a serial number, or randomly or according to a preset sequence.

In Step S1110, identifiers and state information of base stations which are able to be compensated by the base station $cs_j$ are acquired.

In Step S1112, whether the base stations which are able to be compensated by the base station $cs_j$ are in the normal state or not, or whether the base stations have been partially compensated by another base station or other base stations to enter a shrinkage state but there is no conflict between a part compensated by the other base station or the other base stations and an area which is able to be compensated by $cs_j$ or not is judged, Step S1114 is executed if YES, and Step S1118 is executed if NO.

**[0088]** In Step S1114, the $cs_j$ and the base stations which are able to be completely or partially compensated by $cs_j$ form a combination $ss_j$.

In Step S1116, the $ss_j$ is added into the set SS.

In Step S1118, the $cs_j$ is removed from the set CS, and then Step S1106 is executed.

In Step S1010 and Step S1012, it is necessary to know parameters, which are required to be set, of the compensation station and the compensated stations during energy saving, and in Step S1110, the identifiers of the base stations which are able to be compensated by the base station $cs_j$ may specifically be acquired by, but not limited to, a method as follows.

A: a table is established, and compensated coverage of each station or preset station and parameters, which are required to be set to meet the coverage, of the station are recorded. For example, in Fig. 13, compensated coverage of S11 includes areas of ca1~ca6, and when S11 is in a compensation state, its corresponding antenna down tilt angle is 5.3°, wherein a mechanical downward inclination is 0°, and an electric downward inclination required to be obtained by baseband vertical forming is 5.3°.

B: after the table for the compensated coverage of all stations in a certain area is established, a compensation station, which may be one or multiple, corresponding to a certain station may be known by reverse indexing, and some compensation stations may compensate a part of area of the station. For example, in Fig. 13, a compensation station of S43 is S11, and compensation stations of S32 are S11, S112 and S13. When S11 serves as a compensation station, S43 should be dormant. When S11 serves as a compensation station and S112 and S13 are in a normal state, S32 should be in a shrinkage state, and when S11, S112 and S13 are all in a compensation state, S32 should be in a dormant state.

Fig. 12 is a logical flowchart of releasing energy saving of an energy saving method for a radio access network when traffic is increased according to an exemplary embodiment of the present disclosure. When traffic is increased, a flow shown in Fig. 12 is regularly executed as follows.

In Step S1202, all base stations in a compensation state form a set ES.

In Step S1204, if the ES is null, the flow is ended, and if the ES is not null, Step S1206 is executed.

In Step S1206, a base station $es_j$ in the compensation state is sequentially selected or randomly selected from the ES.

In Step S1208, whether compensated traffic of $es_j$ is higher than TH or not is judged, Step S1210 is executed if YES, and Step S1214 is executed if NO.

**[0097]**    In Step S1210, the $es_j$ is released from the compensation state, and enters a normal state.

In Step S1212, base stations which are completely compensated by the $es_j$ switch into a normal state from a dormant state, and partially compensated areas of base stations which are partially compensated by the $es_j$ are covered by themselves instead.

In Step S1214, the base station $es_j$ which has been released from the compensation state is removed from the set ES, and then Step S1204 is executed.

For network topology shown in Fig. 7 in the exemplary embodiment, it is supposed that a simplified traffic change model is represented by traffic in a coverage area of 4 cells (coverage area which is able to be compensated by a base station in the exemplary embodiment):

7:00~20:00 traffic>TH; and
20:00~7:00 traffic>TL,
wherein TL<TH<a maximum service bearing capability of a single station.

When the traffic is decreased, the flow shown in Fig. 10 is executed, and a radio network enters an energy-saving state.

When the traffic is increased, the flow shown in Fig. 12 is executed, and the radio network is recovered into a normal working state.

The state of the simulated network before energy saving is shown in Fig. 7, all the base stations are in the normal state, power of each base station is set to be P, there are totally 57 base stations, and if energy saving is not started, energy consumption per day is:

$$E\_full = P \times 57 \times 24.$$

The state of the simulated network during energy saving is shown in Fig. 13, solid bold arrows represent base stations (sectors) in the compensation state, and their corresponding solid bold hexagons are compensated cells; solid thin arrows represent base stations in the normal state; and there are totally 21 base stations in the compensation state and the normal state, and their power may all be considered to be P. Dotted arrows represent base stations in the dormant state, totally 36, and their power may be simply supposed to be 0 for totally 11 hours. After energy saving is started, energy consumption per day is:

$$E\_saving = P*21*24 + P*36*11,$$

and
saved energy consumption ratio each day is:

$$(E\_full-E\_saving)/E\_full \times 100\% = 34.21\%.$$

From the above, by the method of the exemplary embodiment, relatively more obvious energy saving effects are achieved.

Since cooperation of coverage of the compensation station and all the base stations which are affected by the compensation station is comprehensively considered, the coverage conflict is avoided, and interference is reduced; and in addition, the massive MIMO base stations are adopted, so that the coverage of the base stations may be regulated more flexibly, and the energy saving method of the exemplary embodiment is higher in feasibility.

In another embodiment, software is further provided, which is arranged to execute the technical solutions described in the abovementioned embodiment and exemplary embodiment.

In another embodiment, a storage medium is further provided, in which the abovementioned software is stored, the storage medium including, but not limited to, an optical disk, a floppy disk, a hard disk, an erasable memory and the like.

Obviously, those skilled in the art should know that each module or each step of the present disclosure may be implemented by a universal computing device, and the modules or steps may be concentrated on a single computing device or distributed on a network formed by a plurality of computing devices, and may optionally be implemented by program codes executable for the computing devices, so that the modules or steps may be stored in a storage device for execution with the computing devices, the shown or described steps may be executed in sequences different from those described here in some circumstances, or may form each integrated circuit module respectively, or multiple modules or steps therein may form a single integrated circuit module for implementation. As a consequence, the present disclosure is not limited to any specific hardware and software combination.

The above is only the exemplary embodiment of the present disclosure and not intended to limit the present disclosure, and for those skilled in the art, the present disclosure may have various modifications and variations. Any modifications, equivalent replacements, improvements and the like within the principle of the present disclosure shall fall within the scope of protection defined by the appended claims of the present disclosure.

**Industrial Applicability**

From the above, the energy saving compensation method and device, and the energy saving compensation recovery method and device provided by the embodiments of the present disclosure have the following beneficial effects: high feasibility is achieved, a coverage conflict may also be avoided, and energy saving of the radio network is implemented.

**Claims**

1.  An energy saving compensation method, comprising:

    under a condition that it is determined that energy saving of a radio network is required to be performed, selecting a compensation base station and all base stations which are able to be completely or partially compensated by the compensation base station as an energy saving base station combination; and
    making the base stations, which are able to be completely compensated in the energy saving base station combination, enter a dormant state, making the base stations, which are able to be partially compensated in the energy saving base station combination, enter a shrinkage state, and making the compensation base station enter a compensation state.

2.  The method as claimed in claim 1, wherein selecting the compensation base station and all the base stations which are able to be completely or partially compensated by the compensation base station as the energy saving base station combination under the condition that it is determined that energy saving of the radio network is required to be performed comprises:

    forming a candidate energy saving base station combination by each compensation base station and all base stations which are able to be completely or partially compensated by the compensation base station; and
    under the condition that it is determined that energy saving of the radio network is required to be performed, selecting the energy saving base station combination from multiple candidate energy saving base station combinations.

**3.** The method as claimed in claim 2, wherein selecting the energy saving base station combination from the multiple candidate energy saving base station combination comprises:

selecting a candidate energy saving base station combination of which compensated coverage traffic is lowest and lower than a first preset threshold from the multiple candidate energy saving base station combinations as the energy saving base station combination.

**4.** The method as claimed in claim 3, wherein the compensated coverage traffic is traffic of the compensation base station and traffic of an area which is able to be compensated by the compensation base station.

**5.** The method as claimed in claim 4, wherein the traffic of the area which is able to be compensated by the compensation base station comprises: a sum of traffic of the base stations which are able to be completely compensated by the compensation base station and traffic of the base stations which are able to be partially compensated by the compensation base station, wherein

the traffic of the base stations which are able to be completely compensated by the compensation base station is: own traffic of the base stations which are able to be completely compensated by the compensation base station; and the traffic of the base stations which are able to be partially compensated by the compensation base station is: a product of own traffic of the base stations which are able to be partially compensated by the compensation base station and a ratio of an area compensated by the compensation base station to a service area of the base stations which are able to be partially compensated by the compensation base station; or, traffic, statistically obtained by estimating positions of users by virtue of an uplink forming capability of a massive Multiple Input Multiple Output, MIMO, base station, of the area which is able to be compensated by the compensation base station.

**6.** The method as claimed in claim 1, wherein selecting the compensation base station comprises:

selecting a base station in a normal state from all base stations in a current area or selecting a base station in the normal state from preset base stations among all the base stations in the current area as a candidate compensation base station.

**7.** The method as claimed in claim 6, wherein the preset base stations comprise:

base stations selected according to network planning and network optimization and statistics about historical traffic, wherein selecting the preset base stations as compensation base stations does not cause a coverage conflict and is able to meet a requirement of traffic during energy saving.

**8.** The method as claimed in claim 1, further comprising:

under a condition that it is determined that energy saving of the radio network is required to be released, releasing the compensation base station of which the compensated coverage traffic is higher than a second preset threshold from the compensation state, and recovering states of all the base stations, which are able to be completely or partially compensated by the compensation base station in the energy saving base station combination to which the compensation base station belongs, back into states before compensation.

**9.** The method as claimed in claim 8, wherein the second preset threshold is not higher than maximum traffic which is able to be borne by the compensation base station.

**10.** An energy saving compensation recovery method, comprising:

under a condition that it is determined that energy saving of a radio network is required to be released, selecting an energy saving base station combination in a compensation state, wherein the energy saving base station combination comprises a compensation base station and all base stations which are able to be completely or partially compensated by the compensation base station; and
recovering states of all the base stations, which are able to be completely or partially compensated by the compensation base station in the energy saving base station combination, back into states before compensation.

**11.** An energy saving compensation device, comprising:

a first selection module, arranged to, under a condition that it is determined that energy saving of a radio network is required to be performed, select a compensation base station and all base stations which are able to be completely or partially compensated by the compensation base station as an energy saving base station combination; and

a compensation module, arranged to make the base stations, which are able to be completely compensated in the energy saving base station combination, enter a dormant state, make the base stations, which are able to be partially compensated in the energy saving base station combination, enter a shrinkage state, and make the compensation base station enter a compensation state.

12. An energy saving compensation recovery device, comprising:

a second selection module, arranged to, under a condition that it is determined that energy saving of a radio network is required to be released, select an energy saving base station combination in a compensation state, wherein the energy saving base station combination comprises a compensation base station and all base stations which are able to be completely or partially compensated by the compensation base station; and

a compensation recovery module, arranged to recover states of all the base stations, which are able to be completely or partially compensated by the compensation base station in the energy saving base station combination, back into states before compensation.

Under a condition that it is determined that energy saving of a radio network is required to be performed, a compensation base station and all base stations which are able to be completely or partially compensated by the compensation base station are selected as an energy saving base station combination — S102

The base stations which are able to be completely compensated in the energy saving base station combination enter a dormant state, the base stations which are able to be partially compensated in the energy saving base station combination enter a shrinkage state, and the compensation base station enters a compensation state — S104

**Fig. 1**

First selection module
22

Compensation module
24

**Fig. 2**

Under a condition that it is determined that energy saving of a radio network is required to be released, an energy saving base station combination in a compensation state is selected, wherein the energy saving base station combination includes a compensation base station and all base stations which are able to be completely or partially compensated by the compensation base station — S302

States of all the base stations which are able to be completely or partially compensated by the compensation base station in the energy saving base station combination are recovered back into states before compensation — S304

**Fig. 3**

```
┌─────────────────────────┐
│    Second selection     │
│     module 42           │
└─────────────────────────┘
            │
            │
┌─────────────────────────┐
│ Compensation recovery   │
│     module 44           │
└─────────────────────────┘
```

## Fig. 4

```
┌────────────────────────────────────────────────────────────────┐
│ In a traffic decrease stage, candidate energy saving base       │
│ station combinations of a set of all base stations in an area    │      ~S502
│ are determined according to a selection method of the candidate  │
│ energy saving base station combinations, all the candidate       │
│ energy saving base station combinations forming a candidate      │
│ energy saving base station combination set                       │
└────────────────────────────────────────────────────────────────┘
                              │
                              ▼
┌────────────────────────────────────────────────────────────────┐
│ Compensated coverage traffic (traffic of a candidate            │
│ compensation station and traffic of an area which is able to be   │
│ compensated by the compensation base station) of each candidate  │      ~S504
│ energy saving base station combination is calculated, and the    │
│ candidate energy saving base station combination of which the    │
│ compensated coverage traffic is lowest and lower than a          │
│ threshold TL is selected as an energy saving base station        │
│ combination                                                      │
└────────────────────────────────────────────────────────────────┘
                              │
                              ▼
┌────────────────────────────────────────────────────────────────┐
│ The base stations which are able to be completely compensated    │
│ in the energy saving base station combination enter a dormant    │
│ state, the base stations which are able to be partially           │
│ compensated enter a shrinkage state, the compensation station     │      ~S506
│ enters a compensation state, the candidate energy saving base     │
│ station combination set in Step S502 is updated according to     │
│ new base station states, and S504~S506 are repeated              │
└────────────────────────────────────────────────────────────────┘
                              │
                              ▼
┌────────────────────────────────────────────────────────────────┐
│ In a traffic increase stage, when the compensated coverage       │
│ traffic of the base station in the compensation state is higher   │
│ than a threshold TH, the base station in the compensation state   │      ~S508
│ is released from the compensation state, and the original         │
│ compensated base stations are recovered into a normal state or    │
│ the shrinkage state                                              │
└────────────────────────────────────────────────────────────────┘
```

## Fig. 5

| | |
|---|---|
| A base station in a normal state is selected from all base stations in an area or a base station in the normal state is selected from preset base stations among all the base stations in the area as a candidate compensation station | ~S502-1 |

| | |
|---|---|
| All base stations which are able to be completely or partially compensated by the base station are acquired according to a compensation capability of the candidate compensation station | ~S502-2 |

| | |
|---|---|
| If the base stations which are able to be compensated are in the normal state, or have been partially compensated by another base station or other base stations to enter a shrinkage state but there is no conflict between a part compensated by the other base station or the other base stations and an area which is able to be compensated by the candidate compensation station, the candidate compensation station and all the base stations which are able to be compensated by the candidate compensation station form an effective candidate energy saving base station combination, all candidate energy saving base station combinations form a candidate energy saving base station combination set | ~S502-3 |

## Fig. 6

## Fig. 7

**Fig. 8（a）**

**Fig. 8（b）**

**Fig. 9（a1）**

**Fig. 9（a2）**

Fig. 9（a3）

Fig. 9（b1）

**Fig. 9（b2）**

**Fig. 9（b3）**

**Fig. 9（c1）**

**Fig. 9（c2）**

**Fig. 9（c3）**

**Fig. 9（d1）**

Fig. 9（d2）

Fig. 9（d3）

S1002

All base stations in an involved energy saving area form a set BS

S1004

In the set BS, candidate energy saving base station combinations are determined according to a selection method of the candidate energy saving base station combinations, all the candidate energy saving base station combinations forming a set SS

S1006

$SS \neq \varPhi?$ — No → End

S1008

Yes

The candidate energy saving base station combination $ss_j$ of which compensated coverage traffic is lowest is selected from the set SS

S1010

Base stations which are able to be completely compensated in $ss_j$ enter a dormant state, and base stations which are able to be partially compensated enter a shrinkage state

S1012

A candidate compensation station in $ss_j$ enters a compensation state

**Fig. 10**

26

S1102

A set SS formed by candidate energy saving base station combinations is set to be SS= $\Phi$

S1104

Base stations in a normal state are selected from a set BS formed by all base stations in an involved energy saving area or base stations in the normal state are selected from preset base stations, wherein the base stations of which traffic is lower than a threshold TSL (TSL<a maximum service bearing capability of a base station) form a set CS

S1118

CS=CS-cs$_j$

S1106

CS$\neq \Phi$? — No → End

Yes

S1108

A base station cs$_j$ with lowest traffic is selected from the set CS, or a base station cs$_j$ is selected from the set CS according to a serial number, or randomly or according to a preset sequence

S1110

Identifiers and state information of base stations which are able to be compensated by the base station cs$_j$ are acquired

S1112

No

Whether the base stations which are able to be compensated by the cs$_j$ are in the normal state or not, or whether the base stations have been partially compensated by another base station or other base stations to enter a shrinkage state but There is no conflict between a part compensated by the other base station or the other base stations and an area which is able to be compensated by cs$_j$ or not

Yes

S1114

The cs$_j$ and the base stations which are able to be completely or partially compensated by cs$_j$ form a combination ss$_j$

S1116

SS=SS+ss$_j$

## Fig. 11

S1202

All base stations in a compensation state
form a set ES

S1214

ES=ES-es$_j$

S1204

ES≠ Φ?

No

End

Yes

S1206

A base station es$_j$ in a compensation state is
sequentially selected or randomly selected
from the ES

S1208

No

Whether compensated traffic of es$_j$ is
higher than TH or not

Yes

S1210

The es$_j$ is released from the compensation
state, and enters a normal state

S1212

Base stations which are completely
compensated by the es$_j$ switch into a normal
state from a dormant state, and partially
compensated areas of base stations which
are partially compensated by the es$_j$ are
covered by themselves instead

Fig. 12

**Fig. 13**

# INTERNATIONAL SEARCH REPORT

International application No.

PCT/CN2014/088239

## A. CLASSIFICATION OF SUBJECT MATTER

H04W 52/02 (2009.01) i

According to International Patent Classification (IPC) or to both national classification and IPC

## B. FIELDS SEARCHED

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNPAT, CNKI, WPI, EPODOC, GOOGLE: base station, power save, consumption, group, collection, sets

## C. DOCUMENTS CONSIDERED TO BE RELEVANT

| Category* | Citation of document, with indication, where appropriate, of the relevant passages | Relevant to claim No. |
|---|---|---|
| X | CN 103945502 A (ALCATEL LUCENT SHANGHAI BELL) 23 July 2014 (23.07.2014) description, paragraphs [0001], [0025], [0026], [0069]-[0073] and [0081] | 1-12 |
| A | CN 103733693 A (TELEFONICA SA) 16 April 2014 (16.04.2014) the whole document | 1-12 |
| A | EP 242290 A1 (ALCATEL LUCENT) 29 February 2012 (29.02.2012) the whole document | 1-12 |
| A | CN 102014470 A (ZTE CORP.) 13 April 2011 (13.04.2011) the whole document | 1-12 |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 02 April 2015 | 28 April 2015 |

| Name and mailing address of the ISA State Intellectual Property Office of the P. R. China No. 6, Xitucheng Road, Jimenqiao Haidian District, Beijing 100088, China Facsimile No. (86-10) 62019451 | Authorized officer DONG, Libo Telephone No. (86-10) 61648110 |
|---|---|

Form PCT/ISA/210 (second sheet) (July 2009)

**INTERNATIONAL SEARCH REPORT**
Information on patent family members

International application No.

PCT/CN2014/088239

| Patent Documents referred in the Report | Publication Date | Patent Family | Publication Date |
|---|---|---|---|
| CN 103945502 A | 23 July 2014 | WO 2014111806 A1 | 24 July 2014 |
| CN 103733693 A | 16 April 2014 | WO 2012146683 A1 | 01 November 2012 |
| | | EP 2702810 A1 | 05 March 2014 |
| | | ES 2404979 A2 | 29 May 2013 |
| | | AR 086222 A1 | 27 November 2013 |
| EP 2424290 A1 | 29 February 2012 | None | |
| CN 102014470 A | 13 April 2011 | WO 2012071827 A1 | 07 June 2012 |

Form PCT/ISA /210 (patent family annex) (July 2009)